# EUROPEAN PATENT APPLICATION

(11) **EP 4 848 166 A1**
(43) Date of publication of application: **02.12.2026**
(21) Application number: 26164627.7
(22) Date of filing: 13.03.2026
(51) Int. Cl.: G06Q 10/06, G06Q 10/0639, G06Q 50/04, G06T 7/00, G06T 7/20, G06V 10/70

(54) **SYSTEM FOR ESTIMATING WORK BEING PERFORMED BY WORKER**

(30) Priority: 26.05.2025 JP 2025086878
(71) Applicant: Toyota Jidosha Kabushiki Kaisha, Toyota-shi, Aichi-ken 471-8571 (JP)
(72) Inventor: HOSHI, Katsuya, Toyota-shi, 471-8571 (JP); TSUBAKI, Yuta, Toyota-shi, 471-8571 (JP); FUJII, Natsuki, Toyota-shi, 471-8571 (JP)
(74) Representative: J A Kemp LLP

(57) **Abstract**

A system for estimating work being performed by a worker includes a work location estimation unit that estimates a work area in which the worker is performing the work, a probability distribution acquisition unit that acquires a probability distribution regarding a probability of work that is performable in the work area that is estimated, an action information acquisition unit that acquires action information related to an action of the work being performed by the worker, and a work estimation unit that estimates the worked being performed by the worker using a machine learning model that is trained to take the probability distribution and the action information as input and output the work being performed by the worker, the probability distribution that is acquired, and the action information that is acquired.

## Description

### BACKGROUND OF THE INVENTION

### 1. Field of the Invention

The present disclosure relates to a system for estimating work being performed by a worker.

### 2. Description of Related Art

Various types of technology have been proposed for estimating work being performed by a worker. For example, Japanese Unexamined Patent Application Publication No. 2023-019009 (JP 2023-019009 A) discloses technology for estimating work being performed by a worker by inputting a still image of the worker into a machine learning model.

### SUMMARY OF THE INVENTION

The technology in JP 2023-019009 A is technology that only estimates work from still images, and accordingly work candidates that are estimated are not narrowed down and may become enormous in number. This could result in decrease in estimation precision.

The present disclosure can be implemented in the following aspects.
(1) According to one aspect of the present disclosure, a system for estimating work being performed by a worker is provided. This system includes a work location estimation unit that estimates a work area in which the worker is performing the work, a probability distribution acquisition unit that acquires a probability distribution regarding a probability of work that is performable in the work area that is estimated, an action information acquisition unit that acquires action information related to an action of the work being performed by the worker, and a work estimation unit that estimates the worked being performed by the worker using a machine learning model that is trained to take the probability distribution and the action information as input and output the work being performed by the worker, the probability distribution that is acquired, and the action information that is acquired.

The system of this aspect includes the probability distribution acquisition unit that acquires the probability distribution regarding the probability of work that can be performed in a work area where the worker is estimated to be performing work, the action information acquisition unit that acquires action information regarding the actions of the work being performed by the worker, and the work estimation unit that performs estimation of work that the worker is performing, using (a) the machine learning model that is trained to take as input the probability distribution and the action information and to output the work being performed by the worker, (b) the probability distribution that is acquired, and (c) the action information that is acquired, whereby the work being performed by the worker can be estimated, taking into consideration the work that can be performed in the work area. Thus, estimation precision can be improved.

(2) In the system of the above aspect, the work location estimation unit further may estimate a positional relation relative between the worker and a subject of the work, and the probability distribution acquisition unit may acquire the probability distribution regarding work that is performable in the work area that is estimated and that is performable in the positional relation.

According to the system of this aspect, the work location estimation unit further estimates the positional relation relative between the worker and the subject of the work, and the probability distribution acquisition unit acquires the probability distribution regarding work that can be performed in the work area is estimated and that can be performed in the positional relation, and accordingly the work that the worker is performing can be estimated taking into consideration the work that can be performed in the positional relation. This further enables improved estimation precision as compared to a configuration that estimates the work being performed by the worker without taking into consideration the work that can be performed in the positional relation.

(3) In the system of the above aspect, the work location estimation unit may estimate the work area and the positional relation using image data output from a camera that shoots images of the worker and the subject.

According to the system of this aspect, the work location estimation unit estimates the work area and the positional relation using image data output from the camera that shoots the worker and the subject, and accordingly, the work area and the positional relation can be estimated using the camera that shoots the worker and the subject.

(4) In the system of the above aspect, the action information acquisition unit may acquire the action information using skeletal coordinates of the worker.

According to the system of this aspect, the action information acquisition unit acquires the action information using the skeletal coordinates of the worker, and accordingly, the action information can be acquired regardless of differences in clothing or the physique of the worker.

(5) The system of the above aspect may further include a storage unit in which a work procedure relating to an order of a series of work to be performed by the worker is stored in advance, a determination unit that determines whether the work that is estimated is in compliance with the work procedure, and a warning unit that issues a warning when determination is made that the work that is estimated is not in compliance with the work procedure.

The system of this aspect includes the determination unit that determines whether the estimated work is in compliance with the work procedures, and the warning unit that issues a warning when determination is made that the estimated work is not in compliance with the work procedure, and accordingly the worker him/herself or the supervisor of the worker can recognize that incorrect work is being performed. This keeps a series of work from being completed with the incorrect work left as it is.

In addition to the aspect of the system described above, the present disclosure can be realized in a form of, for example, a device for estimating work of a worker, a device for determining work of a worker, a method for estimating work of a worker, a method for determining work of a worker, a program for realizing at least one of these methods, a program product containing the program, and so forth. The program product may be, for example, a non-transitory recording medium in which a program is recorded, or may be intangible software that can be distributed via a network.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram illustrating a schematic configuration of a system according to an embodiment of the present disclosure;
FIG. 2 is a diagram for describing a probability distribution table;
FIG. 3 is a flowchart showing procedures of an estimation method of work being performed by a worker;
FIG. 4 is a block diagram illustrating a schematic configuration of a system according to a second embodiment; and
FIG. 5 is a flowchart showing procedures of a determination method for work being performed by the worker.

### DETAILED DESCRIPTION OF EMBODIMENTS

### A. First Embodiment

### Configuration of System 100

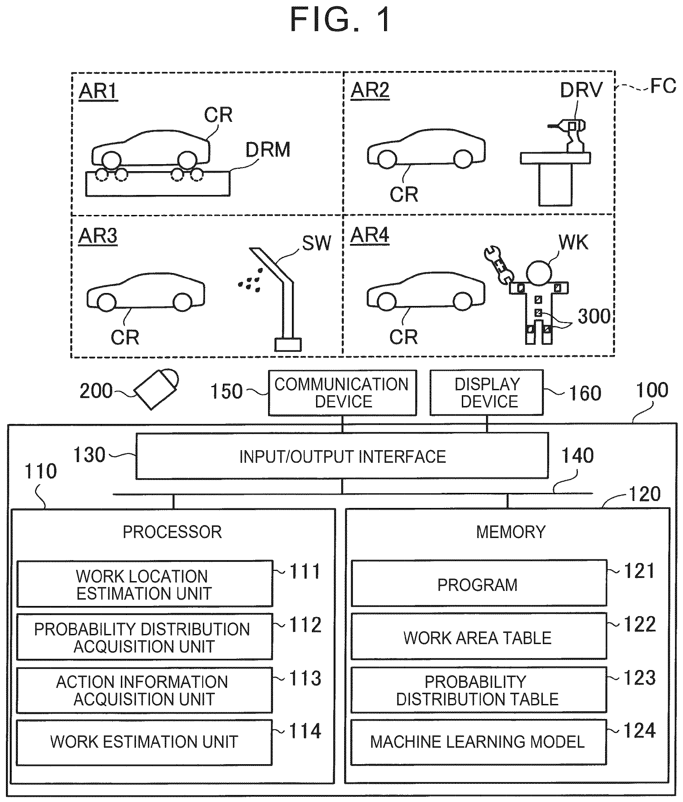

FIG. 1 is a block diagram illustrating a schematic configuration of a system 100 according to an embodiment of the present disclosure. The system 100 is used to estimate work being performed by a worker WK. The system 100 in the present embodiment is used to estimate work in a factory FC. In the factory FC according to the present embodiment, vehicles CR are manufactured. The factory FC in the present embodiment includes a first work area AR1, a second work area AR2, a third work area AR3, and a fourth work area AR4. The work areas AR1 to AR4 are set in advance, and occupy different ranges from one another. Work that is set in advance is performed in each of the work areas AR1 to AR4. Details will be provided later. Note that in the following, an example will be described in which the worker WK is working in the fourth work area AR4, behind a vehicle CR.

The system 100 is configured as a computer equipped with a processor 110, memory 120, and an input/output interface 130. The memory 120 is an example of "storage unit" in the present disclosure. The memory 120 may be configured as any storage device such as a hard disk drive (HDD), a solid state drive (SSD), or the like. The processor 110, the memory 120, and the input/output interface 130 are connected to one another by an internal bus 140. By executing a program 121 stored in the memory 120, the processor 110 realizes various functions including a work location estimation unit 111, a probability distribution acquisition unit 112, an action information acquisition unit 113, and a work estimation unit 114.

### Functions of Work Location Estimation Unit 111

The work location estimation unit 111 estimates the work areas AR1 to AR4 in which the worker WK is performing work. Also, in the present embodiment, the work location estimation unit 111 estimates a positional relation relative between the worker WK and a subject of work. In the present embodiment, the subject is the vehicle CR. In the present embodiment, the work location estimation unit 111 uses image data including the worker WK and the vehicle CR to estimate the work areas AR1 to AR4 in which the worker WK is working, and the positional relation between the worker and the subject. Image data is output by a camera 200 that shoots images of the worker WK and the vehicle CR, and is transmitted to the system 100 via a communication device 150. The transmission may be performed by either a wireless or a wired method.

The work areas AR1 to AR4 in which the worker WK is working can be estimated using position coordinates of the worker WK and a work area table 122. The position coordinates can be obtained by any technique using image data. For example, position coordinates of the worker WK within the factory FC in the real world can be obtained by performing homography transformation of the position coordinates in image data of the worker WK detected using an object detection model such as You Only Look Once (YOLO) or the like.

The work area table 122 is information associating the position of the worker WK with the work areas AR1 to AR4. The work area table 122 is stored in advance in the memory 120. In the work area table 122, the position coordinates of the worker WK and the work areas AR1 to AR4 corresponding to these position coordinates are correlated in advance. For example, when position coordinates (2.2) of the worker WK detected by the work location estimation unit 111 are associated with the fourth work area AR4 in the work area table 122, the work location estimation unit 111 estimates that the worker WK is working in the fourth work area AR4.

The positional relation between the worker WK and the vehicle CR can be estimated by using an object detection technique that uses image data. Examples of such technologies include YOLO, Detectron2, and so forth. The positional relation between the worker WK and the vehicle CR is not limited to the above techniques and may be determined by any method. The positional relation that is estimated may be, for example, "the worker WK is in front of the vehicle CR", "the worker WK is behind the vehicle CR", "the worker WK is inside the vehicle CR", and so forth. In the present embodiment, the work location estimation unit 111 estimates that "the worker WK is working in the work area AR4, behind the vehicle CR".

### Functions of Probability Distribution Acquisition Unit 112

The probability distribution acquisition unit 112 acquires a probability distribution regarding work that can be performed in the work areas AR1 to AR4, estimated by the work location estimation unit 111 and that can be performed in the positional relation estimated by the work location estimation unit 111. In the present embodiment, the probability distribution acquisition unit 112 acquires a probability distribution regarding work related to the fourth work area AR4, which is the work area estimated by the work location estimation unit 111, and which can be performed rearward from the vehicle CR. In the present embodiment, the probability distribution acquisition unit 112 acquires the probability distribution using the work areas AR1 to AR4 and positional relations thereof estimated by the work location estimation unit 111, and a probability distribution table 123.

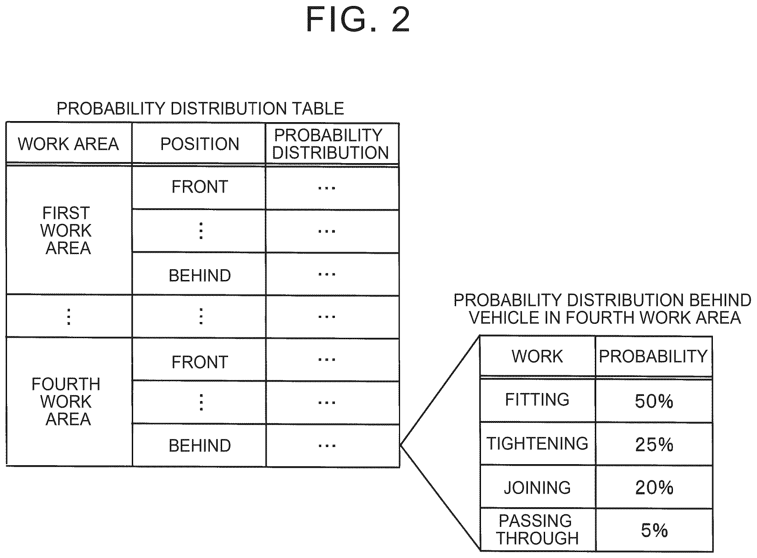

FIG. 2 is a diagram for describing the probability distribution table 123. In FIG. 2, for the sake of convenience, part of the probability distribution table 123 is omitted. As shown on the left side of FIG. 2, the probability distribution table 123 is information associating the work areas AR1 to AR4 and positional relations with a probability distribution relating to the probability of work that can be performed at that location. The probability distribution table 123 is stored in advance in the memory 120. As illustrated in FIG. 1, work that is set in advance is performed in each of the work areas AR1 to AR4. For example, in the first work area AR1, work related to a drum tester DRM is carried out. The drum tester DRM is used for braking force tests, speedometer tests, and so forth, of the vehicle CR. The work relating to the drum tester DRM includes, for example, starting or stopping the drum tester DRM, moving the vehicle CR onto the drum tester DRM, moving the vehicle CR off of the drum tester DRM, and so forth. Also, in the second work area AR2, work related to a screwdriver DRV is carried out. Such work includes, for example, tightening or loosening screws of components of the vehicle CR, or the like. Also, in the third work area AR3, work using a shower device SW is carried out. The shower device SW is used to wash the vehicle CR. Such work includes, for example, moving the shower device SW, turning the power of the shower device SW on or off, and so forth. Also, in the fourth work area AR4, work related to assembling the vehicle CR is carried out. Such work includes, for example, fitting in components, tightening components, joining components together, passing a component through another component, and so forth.

Also, work that is set in advance is performed in accordance with the positional relation between the worker WK and the vehicle CR. For example, when the worker WK is in the fourth work area AR4 and is rearward from the vehicle CR, work is being performed on components such as the tailgate, turn indicators of the vehicle CR, and so forth. Also, for example, when the worker WK is in the fourth work area AR4 and inside the vehicle CR, work is being performed on the seats, interior parts, and so forth, of the vehicle CR. In this way, the work that can be performed differs depending on the positional relation of the worker and the vehicle CR, even within the same fourth work area AR4. That is to say, estimating both the work areas AR1 to AR4 in which the worker WK is working and the positional relation with the vehicle CR enables the work that can be performed by the worker WK to be narrowed down.

The probability distribution acquisition unit 112 acquires a probability distribution of "in work area AR4, and behind vehicle CR" estimated by the work location estimation unit 111 using the probability distribution table 123. On the right side of FIG. 2, an example is shown of the probability distribution in the fourth working area AR4, and behind the vehicle CR. The probability distribution indicates what sort of work can be performed, and the frequency thereof. As shown on the right side of FIG. 2, in the fourth working area AR4, and behind the vehicle CR, 50% of the work is performed by fitting, 25% by tightening, 20% by joining, and 5% by passing through. The probability distribution is prepared in advance by recording a sequence of work performed at this location.

### Functions of Action Information Acquisition Unit 113

As illustrated in FIG. 1, the action information acquisition unit 113 acquires action information relating to actions of the work being performed by the worker WK. The action information is used to estimate the work being performed by the worker WK. In the present embodiment, the action information acquisition unit 113 acquires the action information using skeletal coordinates of the worker WK. The skeletal coordinates represent positions of the joints of the worker WK. The skeletal coordinates are output using detection results of a plurality of sensors 300 attached to the worker WK. The sensors 300 are attached to the head, right and left arms, chest, abdomen, and right and left legs of the worker WK, one each. The sensors 300 are configured to be able to detect physical quantities related to change in attitude of the worker WK. More specifically, the sensors 300 detect acceleration and angular velocity occurring at parts of the worker WK to which the sensors 300 are attached, as the physical quantities related to change in the attitude of the worker WK. In the present embodiment, the sensors 300 are configured as an inertial measurement unit (IMU) including a triaxial acceleration sensor, a triaxial gyro sensor, and a triaxial geomagnetic sensor. Detection results from the sensors 300 are transmitted to the system 100 via the communication device 150. The action information acquisition unit 113 estimates attitudes of the joints of the worker WK using the accelerations and angular velocities output from the sensors 300. The action information acquisition unit 113 also estimates positions of the joints, using the attitudes of the joints that are estimated. This yields the skeletal coordinates. The skeletal coordinates are estimated consecutively. The action information acquisition unit 113 acquires, as action information, changes in skeletal coordinates over time. That is to say, the action information can also be said to be information regarding bodily movements of the worker WK performing the work.

### Functions of Work Estimation Unit 114

The work estimation unit 114 estimates the work being performed by the worker WK using the probability distribution acquired by the probability distribution acquisition unit 112, the action information acquired by the action information acquisition unit 113, and a machine learning model 124. The machine learning model 124 is stored in the memory 120 in advance. The machine learning model 124 is trained in advance to take the probability distribution and the action information as input, and output the work being performed by the worker WK. The work estimation unit 114 estimates the work being performed by the worker WK by inputting the probability distribution acquired by the probability distribution acquisition unit 112 and the action information acquired by the action information acquisition unit 113 into the machine learning model 124. The result of such an estimation is, for example, "fitting" or the like.

The estimation results are displayed on a display device 160, for example. A supervisor of the worker WK can confirm the work being performed by the worker WK by confirming this display, even when the worker WK is not within visual range of the supervisor. The estimation results may also be stored in the memory 120. The estimation results are stored in time sequence. Such estimation results are used to analyze the work performed by the worker WK, for example.

### Estimation Method of Work Being Performed by Worker WK

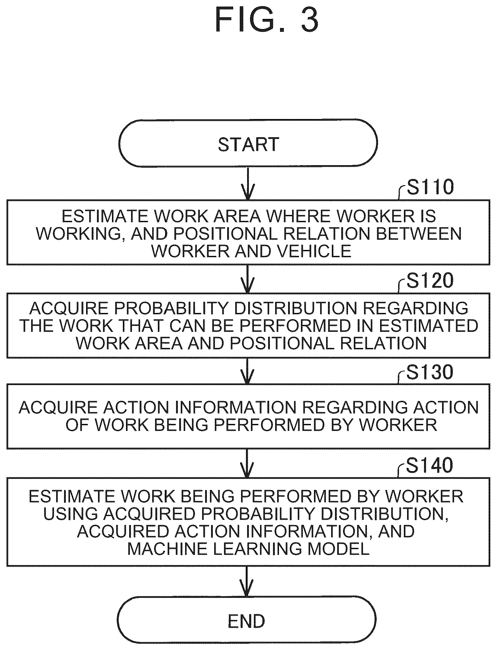

FIG. 3 is a flowchart showing procedures of an estimation method of work being performed by the worker WK. This estimation method is executed when the worker WK starts work.

The work location estimation unit 111 estimates the work areas AR1 to AR4 where the worker WK is working, and the positional relation between the worker WK and the vehicle CR (S110). The work areas AR1 to AR4 are estimated by using, for example, the position coordinates of the worker WK. The positional relation is determined, for example, by using object detection in the image data. The probability distribution acquisition unit 112 acquires a probability distribution regarding the work that can be performed in the work areas AR1 to AR4, and in the positional relation estimated by the work location estimation unit 111 (S120). The probability distribution is acquired by using the probability distribution table 123, for example. The action information acquisition unit 113 acquires action information relating to the action of the work being performed by the worker WK (S130). The action information is acquired by using the skeletal coordinates of the worker WK, for example. The work estimation unit 114 estimates the work being performed by the worker WK using the probability distribution that is acquired, the action information that is acquired, and the machine learning model 124 (S140).

The above-described estimation method is repeatedly executed at cycles set in advance while the worker WK is performing the work. Note that the procedures of steps S110 to S120 and the procedure of step S130 may be performed in parallel. Also, the procedures of steps S110 to S120 may be performed after the procedure of step S130.

According to the system 100 of the first embodiment described above, the system is equipped with the probability distribution acquisition unit 112 that acquires the probability distribution regarding the probability of work that can be performed in the work areas AR1 to AR4 where the worker WK is estimated to be performing work, the action information acquisition unit 113 that acquires action information regarding the actions of the work being performed by the worker WK, and the work estimation unit 114 that performs estimation of work that the worker WK is performing, using (a) the machine learning model 124 that is trained to input the probability distribution and the action information, and output the work being performed by the worker WK, (b) the probability distribution that is acquired, and (c) the action information that is acquired, whereby the work being performed by the worker WK can be estimated, taking into consideration the work that can be performed in the work area AR1. Thus, the estimation precision can be improved as compared to a configuration in which the work being performed by the worker WK is estimated without taking into consideration the work that can be performed in the work areas AR1 to AR4.

Also, according to the system 100 of the first embodiment, the work location estimation unit 111 estimates a positional relation relative between the worker WK and the subject of the work, and the probability distribution acquisition unit 112 acquires the probability distribution regarding work that can be performed in the work area AR1 that is estimated and that can be performed in the positional relation, and accordingly the work that the worker WK is performing can be estimated taking into consideration the work that can be performed in the positional relation. This enables further improved estimation precision as compared to a configuration that estimates the work being performed by the worker WK without taking into consideration the work that can be performed in the positional relation.

Also, according to the system 100 of the first embodiment, the work location estimation unit 111 estimates the work areas AR1 to AR4 where the worker WK is performing work, and the positional relation, using image data including the worker WK and the subject, and accordingly, the work areas AR1 to AR4 in which the worker WK is working and positional relations can be estimated using the camera 200 that shoots the worker WK and the subject.

Also, according to the system 100 of the embodiment, the work location estimation unit 111 estimates the work areas AR1 to AR4 where the worker WK is working, using the position coordinates of the worker WK and the work area table 122, and accordingly, storing an appropriate work area table 122 in the memory 120 in advance enables the work areas AR1 to AR4 to be estimated relatively easily and precisely.

Also, the system 100 of the first embodiment further includes the memory 120 in which the probability distribution table 123 is stored in advance, in which the work areas AR1 to AR4 and positional relations are associated with a probability distribution, and the probability distribution acquisition unit 112 uses the probability distribution table 123 to acquire a probability distribution relating to the work areas AR1 to AR4 that are estimated and the positional relations that are estimated, whereby preparing an appropriate probability distribution table 123 in advance enables more accurate probability distribution to be acquired. By using such a probability distribution, the estimation precision can be improved.

Also, according to the system 100 of the first embodiment, the action information acquisition unit 113 acquires action information using the skeletal coordinates of the worker WK, and accordingly, action information can be acquired regardless of differences in clothing or the physique of the worker WK.

### B. Second Embodiment:

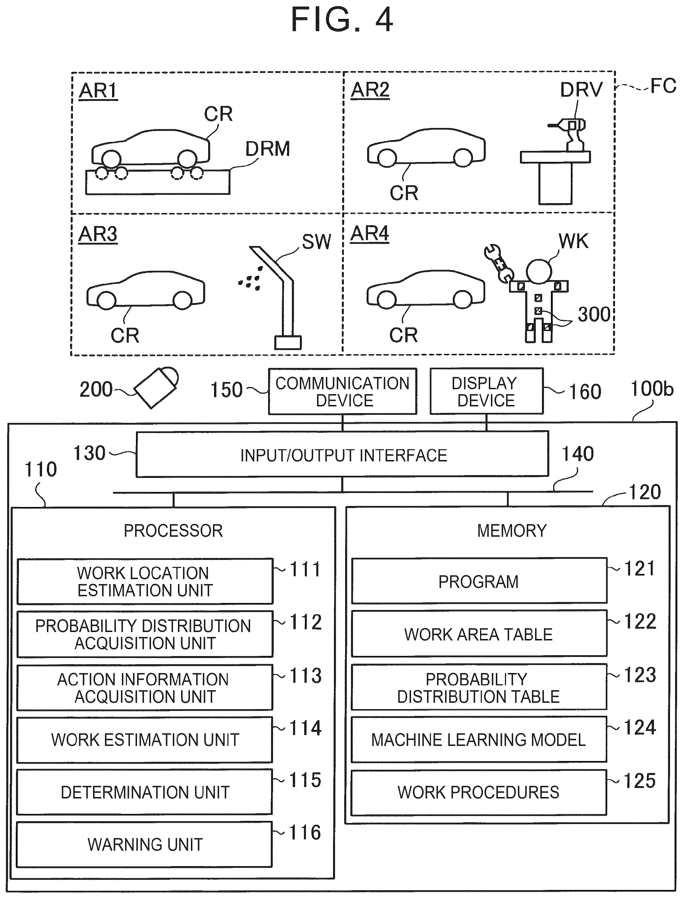

FIG. 4 is a block diagram illustrating a schematic configuration of a system 100b according to a second embodiment. The system 100b of the second embodiment differs from the system 100 of the first embodiment in that the processor 110 further realizes functions of a determination unit 115 and a warning unit 116, and that the memory 120 further stores work procedures 125. Configurations of the system 100b of the second embodiment that are not specifically described below are the same as the configurations of the system 100 of the first embodiment.

The determination unit 115 determines whether the work estimated by the work estimation unit 114 complies with the work procedures 125. The work procedures 125 are stored in the memory 120 in advance. The work procedures 125 are information regarding the order of a series of work to be performed by the worker WK. For example, stored in the work procedures 125 is "taking out component", "taking out tool", "fitting component into vehicle CR", "tightening component to vehicle CR by bolt", and "putting away tool", in this order. When the work estimated by the work estimation unit 114 is "fitting component into vehicle CR", the determination unit 115 determines whether this work is being performed after "taking out tool".

The warning unit 116 issues a warning when the determination unit 115 determines that the estimated work does not comply with the work procedures 125. The warning is issued using the display device 160, for example. The display device 160 is, for example, a display. In the warning, display of text such as, for example, "Incorrect work is being performed" is performed. The worker WK or the supervisor who has confirmed such a warning confirms whether the work is being carried out correctly. The warning may be issued by sound from a speaker, by vibration of a device worn by the worker WK, or the like. It should be noted that the warning unit 116 does not issue a warning when the determination unit 115 determines that the estimated work is in compliance with the work procedures 125.

### Determination Method of Work Being Performed by Worker WK

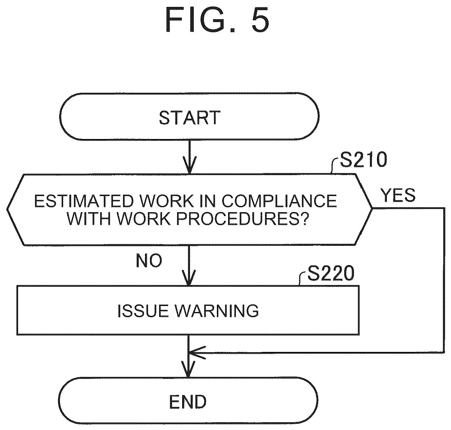

FIG. 5 is a flowchart showing procedures of a determination method of work being performed by the worker WK. This method is carried out next after the estimation method of the work being performed by the worker WK shown in FIG. 3.

As shown in FIG. 5, the determination unit 115 determines whether the work estimated by the work estimation unit 114 complies with the work procedures 125 (S210). When determination is made that the estimated work is in compliance with the work procedures 125 (YES in S210), the processing ends. When determination is made that the estimated work does not comply with the work procedures 125 (NO in S210), the warning unit 116 issues a warning (S220).

The system 100b of the second embodiment described above includes the determination unit 115 that determines whether the estimated work is in compliance with the work procedures 125, and the warning unit 116 that issues a warning when determination is made that the estimated work is not in accordance with the work procedures 125, and accordingly the worker WK him/herself or the supervisor of the worker WK can recognize that incorrect work is being performed. This keeps a series of work from being completed with the incorrect work left as it is.

### C. Other Embodiments:

### C1

In each of the above embodiments, the work location estimation unit 111 estimates both the work areas AR1 to AR4 in which the worker WK is working, and the positional relation, but the present disclosure is not limited to this. The work location estimation unit 111 may estimate just the work areas AR1 to AR4 where the worker WK is working. The work areas AR1 to AR4 may be set as any range in which the worker WK performs work. For example, the work areas AR1 to AR4 may be provided inside the vehicle CR. Alternatively, the work areas AR1 to AR4 may be provided forward from, sideward from, or rearward from the vehicle CR. In such a configuration, the probability distribution relates to the work that can be performed in the work areas AR1 to AR4.

### C2

In each of the above embodiments, the work location estimation unit 111 estimates the work areas AR1 to AR4 in which the worker WK is working using the position coordinates of the worker WK and the work area table 122, but the present disclosure is not limited to this. Also, the work location estimation unit 111 estimates the positional relation relative between the worker WK and the vehicle CR using image data, but the present disclosure is not limited to this. The work location estimation unit 111 may estimate the work areas AR1 to AR4 in which the worker WK is working and the positional relation using any method. For example, the work location estimation unit 111 may estimate the work areas AR1 to AR4 in which the worker WK is working and the positional relation using information regarding the work areas AR1 to AR4 and the positional relation input by the worker WK or the supervisor.

### C3

In each of the above embodiments, the action information acquisition unit 113 acquires the action information using the skeletal coordinates of the worker WK, but the present disclosure is not limited to this. The action information acquisition unit 113 may acquire the action information by any method. For example, the action information acquisition unit 113 may use image data of the worker WK performing a work to acquire coordinates of body parts of the worker WK as action information.

### C4

In each of the above embodiments, the work location estimation unit 111 acquires the position coordinates of the worker WK using image data of the worker WK, but the present disclosure is not limited to this. The work location estimation unit 111 may acquire the position coordinates of the worker WK by any technique. For example, the work location estimation unit 111 may acquire the position coordinates of the worker WK using tracking data, triaxial acceleration data, or the like, of the worker WK.

### C5

In each of the above embodiments, the work estimation unit 114 may estimate work by outputting a probability distribution of work that can be performed by the worker WK. The probability distribution relates to the work being performed by the worker WK and the reliability of the machine learning model 124 that determined that the worker is performing the work. An example of a probability distribution is 60% fitting, 20% joining, 15% tightening, and 5% passing through.

### C6

In each of the above embodiments, the action information acquired by the action information acquisition unit 113 is the change of skeletal coordinates over time, but the present disclosure is not limited to this. The action information may be the skeletal coordinates themselves.

### C7

In each of the above embodiments, the systems 100, 100b may be realized by two or more computers. The machine learning model 124 may be provided on a server provided outside the systems 100, 100b, for example. In this configuration, the systems 100, 100b and the server convey information via the communication device 150.

### C8

In each of the above embodiments, any work may be performed in the work areas AR1 to AR4. Also, the probability of work in the probability distribution table 123 may be arbitrary. Also, in the above embodiments, the factory FC may manufacture any object, and not just the vehicle CR. Also, in the above embodiments, the system 100 may be used in any location, and not just in the factory FC. Also, in the above embodiment, the subject may be any object, and not just the vehicle CR.

### C9

In each of the above embodiments, the work location estimation unit 111 estimates the work areas AR1 to AR4 in which the worker WK is working using the work area table 122, but the present disclosure is not limited to this. The work location estimation unit 111 may estimate the work areas AR1 to AR4 in which the worker WK is working using any technique. Also, in each of the above embodiments, the probability distribution acquisition unit 112 acquires the probability distribution using the probability distribution table 123, but the present disclosure is not limited to this. The probability distribution acquisition unit 112 may acquire a probability distribution stored in any format, and not just the probability distribution table 123.

The present disclosure is not limited to the above embodiments, and can be realized by a variety of configurations without departing from the spirit of thereof. For example, the technical features in each embodiment corresponding to the technical features in each aspect described in "SUMMARY OF THE INVENTION" can be replaced or combined as appropriate in order to solve part or all of the above issues or achieve part or all of the above effects. Also, when the technical features are not described as being essential in the present specification, these features can be omitted as appropriate.

## Claims

1. A system for estimating work being performed by a worker, the system comprising:
a work location estimation unit that estimates a work area in which the worker is performing the work;
a probability distribution acquisition unit that acquires a probability distribution regarding a probability of work that is performable in the work area that is estimated;
an action information acquisition unit that acquires action information related to an action of the work being performed by the worker; and
a work estimation unit that estimates the worked being performed by the worker using a machine learning model that is trained to take the probability distribution and the action information as input and output the work being performed by the worker, the probability distribution that is acquired, and the action information that is acquired.

2. The system according to claim 1, wherein
the work location estimation unit further estimates a positional relation relative between the worker and a subject of the work, and
the probability distribution acquisition unit acquires the probability distribution regarding work that is performable in the work area that is estimated and that is performable in the positional relation.

3. The system according to claim 2, wherein the work location estimation unit estimates the work area and the positional relation using image data output from a camera that shoots images of the worker and the subject.

4. The system according to claim 1, wherein the action information acquisition unit acquires the action information using skeletal coordinates of the worker.

5. The system according to any one of claims 1 to 4 further comprising:
a storage unit in which a work procedure relating to an order of a series of work to be performed by the worker is stored in advance;
a determination unit that determines whether the work that is estimated is in compliance with the work procedure; and
a warning unit that issues a warning when determination is made that the work that is estimated is not in compliance with the work procedure.
